Europäisches Patentamt

European Patent Office

Office européen des brevets

(19)

(11) Numéro de publication : **0 072 317**
**B1**

(12)

# FASCICULE DE BREVET EUROPÉEN

(45) Date de publication du fascicule du brevet :
**24.04.85**

(21) Numéro de dépôt : **82401471.6**

(22) Date de dépôt : **04.08.82**

(51) Int. Cl.⁴ : **C 08 F218/08** // (C08F218/08, 210:00)

(54) Latex de copolymères acétate de vinyle-oléfine et procédé de préparation.

(30) Priorité : **10.08.81 FR 8115439**

(43) Date de publication de la demande :
**16.02.83 Bulletin 83/07**

(45) Mention de la délivrance du brevet :
**24.04.85 Bulletin 85/17**

(84) Etats contractants désignés :
**AT BE CH DE FR GB IT LI NL SE**

(56) Documents cités :
**DE-B- 1 180 133**
**FR-A- 1 479 750**

(73) Titulaire : **RHONE-POULENC SPECIALITES CHIMI-QUES**
**"Les Miroirs" 18, Avenue d'Alsace**
**F-92400 Courbevoie (FR)**

(72) Inventeur : **Schuppiser, Jean-Luc**
**12, Allée d'Apollon Gressy**
**F-77410 Claye-Souilly (FR)**
Inventeur : **Daniel, Jean-Claude**
**13, rue de Neuilly**
**F-94120 Fontenay-sous-Bois (FR)**

(74) Mandataire : **Fabre, Madeleine-France et al**
**RHONE-POULENC RECHERCHES Service Brevets**
**Chimie et Polymères 25, quai Paul Doumer**
**F-92408 Courbevoie Cedex (FR)**

# 0 072 317

**Description**

L'invention a pour objet des latex de copolymères acétate de vinyle-oléfine.

Les latex de copolymères acétate de vinyle-oléfine, préparés par polymérisation en émulsion aqueuse de l'acétate de vinyle et de l'oléfine, sont généralement utilisés comme liants dans la fabrication des colles, peintures, textiles et papiers. De telles applications requièrent des latex stables au stockage et aux manipulations, possédant une certaine viscosité et donnant des films insensibles à l'eau ; propriétés que les latex de copolymères acétate de vinyle-oléfine connus ne possèdent pas simultanément. C'est ainsi que les latex, obtenus par polymérisation sans colloïdes protecteurs, donnent des films de bonne tenue à l'eau, mais possèdent une viscosité trop faible ; la présence de fonctions carboxyliques dans le copolymère permet d'améliorer la viscosité, qui reste cependant variable avec le pH du latex. Par ailleurs, les latex obtenus par polymérisation en présence de colloïdes protecteurs, tels que éthers de cellulose, alcools polyvinyliques, ou polyvinylpyrrolidone, possèdent, quel que soit leur pH, une viscosité satisfaisante, mais donnent des films très sensibles à l'eau ; en outre leur viscosité provoque en cours de préparation des difficultés d'agitation, d'échange thermique, de transfert et de filtration.

Les latex de copolymères objet de l'invention ne présentent pas ces inconvénients, ils possèdent simultanément les propriétés nécessaires à leurs applications et sont de préparation facile.

Les latex de copolymères acétate de vinyle-oléfine selon l'invention sont constitués de particules de diamètre moyen compris entre 0,05 et 1 μm de copolymères ayant une température de transition vitreuse comprise entre − 30 et 50 °C, dont la concentration est comprise entre 10 et 70 % en poids et sont susceptibles d'être obtenus par polymérisation en émulsion aqueuse de l'acétate de vinyle avec au moins une oléfine et éventuellement au moins un autre monomère copolymérisable en présence d'un initiateur et d'un colloïde protecteur constitué a) d'un polymère de N-méthylolacrylamide ou de N-méthylolméthacrylamide soluble dans l'eau et b) d'un polymère d'éthylène glycol de masse moléculaire comprise entre 1 000 et 50 000 soluble dans l'eau.

Les latex de l'invention se caractérisent par le fait que pour une concentration donnée, leur viscosité faible à pH acide devient élevée à pH alcalin, puis reste invariable quel que soit le pH et en ce qu'ils donnent des films de copolymères insensibles à l'eau.

Par copolymères acétate de vinyle-oléfine, on entend les copolymères de l'acétate de vinyle avec au moins une oléfine possédant 2 à 4 atomes de carbone, telle que éthylène, propylène, butènes ; ainsi que les copolymères de l'acétate de vinyle avec au moins une oléfine et au moins un autre monomère copolymérisable éventuellement greffé, choisi parmi les esters vinyliques d'acides monocarboxyliques saturés, ramifiés ou non, ayant de 1 à 12 atomes de carbone, comme le propionate, le « Versatate »[®] (marque déposée pour des esters d'acides ramifiés en $C_9$-$C_{11}$), le pivalate, le laurate de vinyle et/ou les esters d'acides insaturés mono- ou dicarboxyliques possédant 3 à 6 atomes de carbone et d'alcool possédant 1 à 10 atomes de carbone, comme les acrylates, méthacrylates, maléates, fumarates de méthyle, d'éthyle, de butyle, d'éthylhexyle, ainsi que les halogénures de vinyle et de vinylidène, comme le chlorure de vinyle, le chlorure de vinylidène.

Dans le latex, la concentration en particules de copolymères est comprise entre 10 et 70 % et de préférence entre 35 et 65 % en poids. Les particules ont un diamètre moyen compris entre 0,05 et 1 μm et leur répartition granulométrique peut être large ou étroite, suivant les conditions de polymérisation mises en œuvre. Les polymères possèdent une température de transition vitreuse comprise entre − 30 et 50 °C et de préférence entre − 20 et 35 °C.

Dans le latex de copolymère acétate de vinyle-oléfine, le colloïde protecteur représente 0,1 et 5 % et de préférence 0,5 à 3 % en poids du copolymère et est formé de 15 à 70 % en poids d'un polymère de N-méthylolacrylamide ou N-méthylolméthacrylamide a) et 30 à 85 % en poids du polymère d'éthylène glycol b).

Par polymère a) on entend : soit des homopolymères de N-méthylolacrylamide ou de N-méthylolméthacrylamide ; soit des copolymères de N-méthylolacrylamide et N-méthylolméthacrylamide en toutes proportions ; soit des copolymères de N-méthylolacrylamide et/ou N-méthylolméthacrylamide avec au moins un amide des acides acrylique et méthacrylique et de leurs dérivés N-alkylés, dont le groupe alkyle possède 1 à 4 atomes de carbone et peut être substitué par des groupes amine ou alcoxy possédant 1 à 4 atomes de carbone ou dont le groupe alkyle possède 2 à 4 atomes de carbone et peut être substitué par un groupe hydroxy, tels que, par exemple, acrylamide, méthacrylamide, N-méthylacrylamide, N,N-diméthylacrylamide, N-isopropylacrylamide, N-méthylaminoisopropylacrylamide, N-méthoxyméthylacry-lamide, N-isobutoxyméthylacrylamide, dans lesquels l'amide d'acides acrylique ou méthacrylique représente au plus 90 % en poids du copolymère ; soit encore des mélanges des homopolymères et copolymères ci-dessus.

Par polymère b), on entend : soit des homopolymères d'éthylène glycol ; soit des copolymères d'éthylène glycol et de propylène glycol et/ou de butylène glycol, dans lesquels la proportion d'éthylène glycol est d'au moins 70 % en poids ; soit des mélanges d'homopolymères ou de copolymères de masse moléculaire différente ; soit encore des mélanges d'homopolymères et de copolymères. Ces homo- et co-polymères d'éthylène glycol possèdent une masse moléculaire comprise entre 1 000 et 50 000 et de préférence entre 3 000 et 35 000.

2

Les latex à pH acide après leur préparation possèdent une viscosité faible, ce qui facilite leur manipulation. Cette viscosité s'élève dès que le pH du latex devient alcalin, par exemple par addition d'une solution alcaline, pour atteindre un maximum, se stabiliser et rester invariable quel que soit le pH. La viscosité maximum est fonction de la nature du colloïde protecteur et de sa concentration dans le latex et le temps pour l'atteindre est fonction de la valeur du pH alcalin, le temps étant d'autant plus long que le pH est proche de la neutralité.

Si pour une raison quelconque, la viscosité maximum du latex est indésirable, il est possible de stopper l'élévation de la viscosité et de la stabiliser en ramenant le latex à pH acide, par exemple par addition d'une solution acide. Une nouvelle alcalinisation du latex provoque la reprise de l'élévation de la viscosité jusqu'à une valeur voisine du maximum.

Les oléfines qui peuvent être copolymérisées avec l'acétate de vinyle possèdent 2 à 4 atomes de carbone et sont représentées par l'éthylène, le propylène, les butènes.

Par autres monomères copolymérisables, on entend les esters vinyliques d'acides monocarboxyliques saturés, ramifiés ou non, ayant de 1 à 12 atomes de carbone, comme le propionate, le « Versatate »[®] (marque déposée pour des esters d'acides ramifiés en $C_9$-$C_{11}$), le pivalate, le laurate de vinyle et/ou les esters d'acides insaturés mono- ou di-carboxyliques possédant 3 à 6 atomes de carbone et d'alcool possédant 1 à 10 atomes de carbone, comme les acrylates, méthacrylates, maléates, fumarates de méthyle, d'éthyle, de butyle, d'éthylhexyle, et/ou les halogénures de vinyle et de vinylidène, comme le chlorure de vinyle, le chlorure de vinylidène.

Ces monomères copolymérisables peuvent être polymérisés avec l'acétate de vinyle et au moins une oléfine, ou bien être greffés sur le copolymère acétate de vinyle-oléfine.

Les oléfines et autres comonomères sont mis en œuvre en quantités telles que la température de transition vitreuse du copolymère obtenu soit comprise entre − 30 et 50 °C et de préférence entre − 20 et 35 °C.

Les monomères sont introduits dans le milieu de polymérisation, sous pression si le monomère est gazeux, soit en totalité avant polymérisation, ou en cours de polymérisation par fractions successives ou en continu, soit en partie avant polymérisation et l'autre partie en cours de polymérisation par fractions successives ou en continu.

Suivant le polymère à obtenir, il est possible d'ajouter aux monomères un monomère réticulant et/ou un agent limiteur de chaîne.

Le monomère réticulant, mis en œuvre en proportions comprises entre 0 et 10 % et de préférence entre 0 et 3 % en poids par rapport aux monomères, est représenté plus particulièrement par les acrylate et méthacrylate de vinyle, le divinyléther, les acrylates et méthacrylates de mono- et poly-alkylène ($C_2$-$C_4$) glycol, le phtalate d'allyle, le cyanurate de triallyle, le tétraallyloxyéthane, les diallylsulfosuccinates alcalins, les condensats d'acides carboxyliques ($C_3$-$C_5$) insaturés et de polyols, comme par exemple, les acrylate et méthacrylate de triméthylolpropane.

L'agent limiteur de chaîne, mis en œuvre en proportions comprises entre 0 et 10 et de préférence entre 0 et 3 % en poids par rapport aux monomères, est représenté, entre autres par les hydrocarbures halogénés, tels que chlorure de méthylène, chloroforme, tétrachlorure de carbone, bromoforme, tétrabromure de carbone, dichloréthane, trichloréthane ; les alcools aliphatiques ayant 1 à 4 atomes de carbone, tels que alcool méthylique, alcool allylique et de préférence par les mercaptans, tels que laurylmercaptan, dodécylmercaptan, aminophénylmercaptan.

Le monomère réticulant et/ou l'agent limiteur de chaîne sont introduits seuls ou en mélange, de toute façon connue en soi, avant ou en cours de polymérisation, par exemple, en même temps que les monomères, ou en même temps que l'un des monomères, soit simultanément, soit plus particulièrement en solution dans l'un des monomères ou en solution dans le mélange des monomères.

La concentration en monomères du milieu de polymérisation est avantageusement comprise entre 10 et 70 % en poids.

En tant qu'initiateur, on utilise un initiateur hydrosoluble classique de la polymérisation en émulsion et plus particulièrement l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine, les formaldéhydesulfoxylates métalliques. L'initiateur est mis en œuvre dans des proportions de l'ordre de 0,05 à 4,5 % et de préférence 0,1 à 2 % en poids des monomères. Il est introduit dans le milieu de polymérisation en totalité avant polymérisation ou en cours de polymérisation par fractions successives ou en continu, ou encore en partie avant polymérisation, l'autre partie étant ajoutée en cours de polymérisation par fractions successives ou en continu, particulièrement lorsque la durée de vie de l'initiateur à la température de polymérisation est faible.

Le colloïde protecteur à mettre en œuvre pour obtenir les latex de l'invention comprend deux constituants : a) un polymère de N-méthylolacrylamide ou de N-méthylolméthacrylamide soluble dans l'eau et b) un polymère de polyéthylène glycol soluble dans l'eau.

Par polymère a) on entend : soit des homopolymères de N-méthylolacrylamide ou de N-méthylolméthacrylamide ; soit des copolymères de N-méthylolacrylamide et N-méthylolméthacrylamide en toutes proportions ; soit des copolymères de N-méthylolacrylamide et/ou N-méthylolméthacrylamide avec au moins un amide des acides acrylique et méthacrylique et de leurs dérivés N-alkylés, dont le groupe alkyle possède 1 à 4 atomes de carbone et peut être substitué par des groupes amine ou alcoxy possédant 1 à 4 atomes de carbone ou dont le groupe alkyle possède 2 à 4 atomes de carbone et peut être substitué par un groupe hydroxy, tels que, par exemple, acrylamide, méthacrylamide, N-méthylacrylamide, N,N-diméthylacrylamide, N-isopropylacrylamide, N-méthylaminoisopropylacrylamide, N-méthoxyméthylacrylamide, N-isobutoxyméthylacrylamide, dans lesquels l'amide d'acide acrylique ou méthacrylique représente au plus 90 % en poids du copolymère ; soit encore des mélanges des homopolymères et copolymères ci-dessus.

Les homo- et co-polymères de N-méthylolacrylamide et N-méthylolméthacrylamide peuvent être préparés par exemple par polymérisation en solution aqueuse du ou des amides à une concentration de 0,1 à 7 % en poids, en présence d'un initiateur radicalaire hydrosoluble et/ou de rayonnements ultra-violets, à une température comprise entre 0 et 90 °C.

L'initiateur à mettre en œuvre dans cette polymérisation est un initiateur radicalaire hydrosoluble classique de la polymérisation en solution, tel que l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine ou les formaldéhyldesulfoxylates métalliques. Tous ces initiateurs sont mis en œuvre seuls ou en mélange, à raison de 0,1 à 10 % en poids du ou des amides.

Ces homo- et co-polymères de N-méthylolacrylamide et N-méthylolméthacrylamide peuvent être réticulés par des quantités pouvant aller jusqu'à 50 % en poids du ou des amides d'agents réticulants hydrosolubles représentés par les N,N'-alkylidène en $C_1$-$C_4$ bis-(amide d'acide insaturé en $C_3$-$C_5$), tels que N,N'-méthylène bis (acrylamide), N,N'-méthylène bis (méthacrylamide), l'éther diallylique, le sulfosuccinate diallylique, l'oxyéthane polyallylique.

Par polymère b) on entend : soit des homopolymères d'éthylène glycol ; soit des copolymères d'éthylène glycol et de propylène glycol et/ou de butylène glycol, dans lesquels la proportion d'éthylène glycol est d'au moins 70 % en poids ; soit des mélanges d'homopolymères ou de copolymères de masse moléculaire différente ; soit encore des mélanges d'homopolymères et de copolymères. Ces homo- et copolymères d'éthylène glycol possèdent une masse moléculaire comprise entre 1 000 et 50 000 et de préférence entre 3 000 et 35 000. Ce sont des produits en eux-mêmes connus et commercialisés.

Selon l'invention, le colloïde protecteur est formé de 15 à 70 % en poids du polymère a) et de 30 à 85 % en poids du polymère b), et il est utilisé à raison de 0,1 à 5 % et de préférence 0,5 à 3 % en poids des monomères à polymériser.

Les deux constituants du colloïde protecteur sont mis en œuvre sous forme de solutions aqueuses.

La solution de polymère a) peut être utilisée à tout moment après sa préparation, toutefois, selon une forme préférée de l'invention, elle est utilisée immédiatement après sa préparation.

Les deux solutions peuvent être introduites séparément dans le milieu de polymérisation, ou bien le polymère b) peut être dissous dans la solution de polymère a) ou encore, le polymère b) peut être présent dans la préparation du polymère a). Ces introductions sont effectuées soit en une seule fois avant polymérisation, soit en cours de polymérisation par fractions successives ou en continu.

Dans la ou les solutions aqueuses à utiliser, le polymère a) plus le polymère b) représentent de 0,1 à 15 % en poids de l'eau.

Afin d'assurer la stabilité du milieu de polymérisation de l'acétate de vinyle et de l'oléfine et du latex à obtenir, il peut être avantageux d'ajouter un ou plusieurs agents émulsifiants au milieu réactionnel. Ces agents émulsifiants, anioniques et/ou non ioniques, sont des produits classiques des polymérisations en émulsion.

Parmi les agents émulsifiants anioniques, peuvent être cités les sels d'acides gras ; les alkylsulfates, alkylsulfonates, alkylarylsulfonates, alkylsulfosuccinates, alkylphosphates alcalins ; les sulfonates d'éthers alkylphénolpolyglycoliques ; les sels d'esters d'acides alkylsulfopolycarboxyliques ; les produits de condensation des acides gras avec les acides oxy- et amino-alcanesulfoniques ; les dérivés sulfatés des éthers polyglycoliques ; les esters sulfatés d'acides gras et de polyglycols ; les alcanolamides d'acides gras sulfatés.

Parmi les agents émulsifiants non ioniques, sont à mentionner les esters gras de polyalcools, les alcanolamides d'acides gras, les polyoxydes d'éthylène, les copolyoxydes d'éthylène et de propylène, les alcools et alkylphénols oxyéthylénés, les alcools et alkylphénols oxyéthylénés et sulfatés.

Les quantités d'agent(s) émulsifiant(s) à mettre en œuvre sont de l'ordre de 0,1 à 3 % en poids par rapport aux monomères et leur introduction dans le milieu réactionnel peut être effectuée soit en totalité avant la polymérisation, soit en partie avant la polymérisation, la partie complémentaire étant ajoutée au milieu réactionnel au cours de la polymérisation par fractions successives ou en continu, soit encore en totalité au cours de la polymérisation par fractions successives ou en continu, suivant le diamètre moyen des particules du latex à obtenir. Selon une forme particulière de réalisation de l'invention, l'agent émulsifiant est ajouté au milieu de préparation du polymère de N-méthylolacrylamide ou N-méthylolméthacrylamide, premier constituant du colloïde protecteur.

Selon la nature des monomères mis en œuvre et afin d'éviter l'hydrolyse du copolymère d'acétate de vinyle et d'oléfine, il peut être avantageux de maintenir le milieu de polymérisation à un pH de 3 à 7. Ce qui peut être obtenu par addition au milieu d'un régulateur de pH représenté notamment par une base, telle que la soude ou l'ammoniaque et/ou par un tampon, tel que l'acétate de sodium, le bicarbonate de sodium, le borax. Le régulateur est ajouté au milieu, seul ou en mélange, en totalité ou en partie avant la polymérisation, la partie complémentaire étant ajoutée au cours de la polymérisation par fractions successives ou en continu, ou encore en totalité au cours de la polymérisation par fractions successives ou en continu et plus particulièrement dans le milieu de préparation du polymère de N-méthylolacrylamide ou N-méthylolméthacrylamide, premier constituant du colloïde protecteur.

La température de polymérisation, fonction de l'initiateur mis en œuvre et du polymère à obtenir, est généralement comprise entre 0 et 95 °C et de préférence entre 20 et 90 °C.

Selon une variante, les latex sont préparés par polymérisation en présence d'un polymère semence, ce qui assure un meilleur contrôle de la granulométrie des particules du latex à obtenir. Ce polymère semence peut être identique au polymère à obtenir ou bien être différent. Il est obtenu par polymérisation en émulsion aqueuse d'acétate de vinyle ou d'acétate de vinyle ou d'oléfine, et/ou d'au moins un des monomères copolymérisables énumérés plus haut. Le latex de polymère semence obtenu est ajouté au milieu de polymérisation en même temps que l'un des constituants du colloïde protecteur, ou en même temps que le mélange de ces deux constituants. Le polymère semence peut également être préparé en présence de l'un ou des deux constituants du colloïde protecteur.

Suivant l'application envisagée du latex de copolymère acétate de vinyle-oléfine, il est possible d'ajouter, avant, pendant ou après polymérisation, un agent de plastification dans des proportions comprises entre 0 et 20 % et de préférence entre 0 et 10 % en poids par rapport au copolymère. Cet agent de plastification, mis en œuvre seul ou en mélange, est choisi parmi les plastifiants et agents de coalescence classiques du polyacétate de vinyle, tels que les phtalates d'alkyle ($C_4$-$C_6$) halogénés ou non, comme les phtalates de dibutyle, de diéthyle, de trichloréthyle ; les phtalate, adipate et dibenzoate d'éthylène glycol, l'acétate de butylcarbitol, le glycolate de butyle, la triacétine de glycérol, les succinates, glutarates, adipates dipropyliques ou diisobutyliques, les phosphates de tricrésyle et de triphényle.

Les latex de copolymères acétate de vinyle-oléfine sont utilisés comme liants dans la fabrication des peintures, colles, papiers, textiles, notamment non tissés, revêtements de sol, additifs pour mortiers.

On donne, ci-après, à titre indicatif et non limitatif, des exemples de réalisation de l'invention, dans lesquels :
— les pourcentages sont en poids ;
— la viscosité du latex est mesurée à 20 °C, au viscosimètre Brookfield RVT, vitesse 50 t/min ;
— le diamètre des particules est mesuré par microscopie électronique ;
— la température de transition vitreuse (Tg) du polymère est mesurée par analyse calorimétrique différentielle ;
— la tenue à l'eau du copolymère est déterminée en plaçant une goutte d'eau déminéralisée sur un film de copolymère de 300 μm obtenu par dépôt du latex sur une plaque de verre transparent, suivi d'un séchage 2h à 50 °C, puis 24 h à température ambiante. La tenue à l'eau est exprimée par le temps nécessaire pour que le film s'opacifie à l'emplacement de la goutte d'eau ;
— la tenue à l'abrasion humide est mesurée à l'aide d'un abrasimètre à 6 têtes, sous une charge de 1 000 g, effectuant au maximum 10 000 aller-retours (cycles), sur un film de peinture de 100 μm, déposé au filmographe sur une plaque de polychlorure de vinyle rigide et séché une semaine à température ambiante. Après un nombre de cycles donné, le taux d'usure est déterminé.

Exemple 1

Préparation du colloïde

Dans un autoclave muni d'un agitateur, d'un réfrigérant et d'une arrivée d'azote, sont introduits :

1 150 g d'eau désionisée ;
7 g d'acrylamide ;
12 g d'une solution aqueuse à 60 % de N-méthylolacrylamide ;
9,5 g d'acétate de sodium ;
168,5 g d'une solution aqueuse à 24 % de tétradécylsulfonate de sodium ;
19 g de polyéthylène glycol de masse moléculaire 10 000.

L'air est éliminé par passage d'un courant d'azote, qui est maintenu et le mélange est agité. Après dissolution, la solution est chauffée à 60 °C, température qui est maintenue.

Dès que le mélange est à 60 °C, 0,75 g de persulfate d'ammonium en solution dans 50 cm³ d'eau est introduit. Après 1 heure de réaction, le mélange réactionnel est refroidi et le passage d'azote arrêté.

Polymérisation

Après avoir fait le vide dans l'autoclave, sont introduits :

237,5 g d'isobutène, puis ;
380 g d'acétate de vinyle.

Le mélange réactionnel est chauffé à 80 °C, température qui est maintenue pendant la durée de la réaction, et 9,5 g de persulfate de potassium dans 200 cm³ d'eau sont introduits.

Après une heure, sont introduits simultanément et en continu :

1 282,5 g d'acétate de vinyle à débit constant en 5 h ;
19 g de persulfate de potassium en solution dans 200 cm³ d'eau, à débit constant en 7 heures.

2 heures après la fin de l'introduction continue de persulfate de potassium, le mélange réactionnel est refroidi.

Un latex de copolymère acétate de vinyle/isobutène 87/13 est obtenu qui présente les caractéristiques suivantes :

| | |
|---|---|
| pH | 2,7 |
| viscosité | 350 mPa.s |
| concentration | 49,5 % |
| diamètre des particules | 0,2-0,5 µm |
| Tg du copolymère | 21 °C |
| Tenue à l'eau | 13 min |

Un copolymère acétate de vinyle/isobutène 87/13 préparé par polymérisation en émulsion en présence d'hydroxyéthylcellulose en quantité égale à celle du colloïde protecteur de l'exemple 1, possède une tenue à l'eau de 2 min.

Par addition d'ammoniaque, le latex est amené à pH 9 ; sa viscosité atteint 4 000 mPa.s après 10 h et se stabilise.

Application

Avec le latex obtenu une peinture est préparée par addition d'une pâte pigmentaire et d'ammoniaque, afin d'avoir une concentration pigmentaire en volume (CPV) de 76 % et un pH de 8,5.

La tenue à l'abrasion humide est déterminée sur la peinture obtenue et à titre comparatif sur une peinture de même CPV préparée avec un latex de copolymère acétate de vinyle/isobutène 87/13 contenant de l'hydroxyéthylcellulose en quantité égale à celle du colloïde protecteur de l'exemple 1.

Les résultats obtenus sont reportés ci-après :

| Taux d'usure | Exemple 1 | Essai comparatif |
|---|---|---|
| Après 250 cycles | 0 % | 10 % |
| Après 1000 cycles | 0 % | 50 % |
| Après 10.000 cycles | 0 % | 100 % |

Exemple 2

Préparation du colloïde

Dans un autoclave muni d'un agitateur et résistant à une pression de 50 bars, sont introduits :

770 g d'eau désionisée ;
5,5 g d'acétate de sodium ;
4 g de tétradécylsulfonate de sodium en solution aqueuse à 25 % ;
7,5 g d'acrylamide ;
7,5 g de N-méthylolacrylamide en solution aqueuse à 60 % ;
19 g de polyéthylène glycol de masse moléculaire 10 000.

L'air est éliminé par passage d'un courant d'azote qui est maintenu et le mélange est agité. Après dissolution totale, la solution est chauffée à 60 °C, température qui est maintenue. Dès que le mélange est à 60 °C, 0,8 g de persulfate d'ammonium en solution dans 50 cm³ d'eau sont introduits. Après 1 heure, le passage du courant d'azote est arrêté.

Polymérisation

2,5 g de persulfate de potassium dans 50 cm³ d'eau sont introduits dans le réacteur.

Après avoir fait le vide dans le réacteur, simultanément et en continu, on introduit :
1 240 g d'acétate de vinyle à débit constant en 5 h ;

de l'éthylène sous une pression constante de 30 bars maintenue pendant toute l'introduction ; 6,2 g de persulfate de potassium en solution dans 200 cm³ d'eau, à débit constant en 5 h.

Du commencement des introductions :

après 15 minutes, le mélange réactionnel est chauffé à 80 °C et maintenu à cette température ; après 30 minutes est commencée l'introduction continue de 4 g de tétradécylsulfonate de sodium dans 200 cm³ d'eau avec un débit constant de 57 cm³/h ; après 3 heures 30 minutes, l'introduction d'éthylène est arrêtée ; après 6 heures, le mélange réactionnel est refroidi.

Un latex de copolymère acétate de vinyle/éthylène 85/15 est obtenu, qui présente les caractéristiques suivantes :

| | |
|---|---|
| pH | 4,5 |
| viscosité | 900 mPa.s |
| concentration | 54 % |
| diamètre des particules | 0,3-0,6 μm |
| Tg du copolymère | 0 °C |

Par addition d'ammoniaque, le latex est porté à pH 9 ; sa viscosité atteint 6 000 mPa.s après 10 heures et se stabilise.

Si le pH du latex est amené à 4 par addition d'acide acétique, sa viscosité n'est pas sensiblement modifiée et se stabilise à 5 800 mPa.s.

## Exemple 3

Un latex de copolymère acétate de vinyle/éthylène est préparé comme dans l'exemple 2.
Le latex agité est chauffé à 60 °C, température qui est maintenue.
Simultanément et en continu, sont introduits :

387 g de chlorure de vinyle à débit constant en 3 h ;
4 g de persulfate d'ammonium en solution dans 200 cm³ d'eau à débit constant en 4 heures ;
4 g de métabisulfite de sodium en solution dans 200 cm³ d'eau à débit constant en 4 heures ;
2 g de tétradécylsulfonate de sodium en solution dans 200 cm³ d'eau à débit constant en 4 heures.

3 heures après la fin de l'introduction du chlorure de vinyle, le mélange est refroidi.
Un latex de copolymère acétate de vinyle/éthylène greffé chlorure de vinyle 67,5/11, 5/21 est obtenu, qui présente les caractéristiques suivantes :

| | |
|---|---|
| pH | 4,3 |
| viscosité | 500 mPa.s |
| concentration | 51,2 % |
| diamètre des particules | 0,4-0,7 μm |
| Tg du copolymère greffé | 10 °C |

Par addition d'ammoniaque, une partie du latex est portée à pH 9 ; sa viscosité est de 4 000 mPa.s après 24 heures et se stabilise.

L'autre partie est également portée à pH 9 par addition d'ammoniaque. La viscosité est de 1 900 mPa.s après 5 h. L'addition d'acide acétique, pour avoir un pH de 4,5 arrête l'augmentation de la viscosité qui se stabilise à 1 800 mPa.s.

## Exemple 4

Préparation du colloïde

Dans un réacteur muni d'un réfrigérant, d'une arrivée d'azote et d'un agitateur, sont introduits :

2 580 g d'eau désionisée ;
33,75 g d'une solution aqueuse à 60 % de N-méthylolacrylamide ;
27 g d'acétate de sodium ;
75 g d'une solution à 30 % de tétradécylsulfonate de sodium ;
90 g de polyéthylène glycol de masse moléculaire 10 000.

L'air est éliminé par passage d'un courant d'azote qui est maintenu pendant la préparation du colloïde. Le mélange est agité.

Après dissolution, la solution est chauffée à 60 °C, température qui est maintenue.
Dès que la solution est à 60 °C, 3,5 g de persulfate d'ammonium dans 100 cm$^3$ d'eau sont introduits.
Après 1 heure de réaction, le passage d'azote est arrêté.

Préparation d'une semence

4 g de persulfate d'ammonium et 225 g d'acrylate d'éthyle sont ajoutés à la solution de colloïde.
Après 20 minutes, le milieu réactionnel est chauffé à 80 °C, maintenu à cette température pendant 1 heure, puis refroidi à température ambiante.

Polymérisation

Dans un réacteur on introduit successivement, après avoir fait le vide :

650 g de la semence obtenue précédemment ;
980 g d'eau désionisée ;
7 g de laurylmercaptan.

Le mélange est agité et chauffé à 80 °C, température qui est maintenue pendant la durée de la réaction.
Dès que le mélange est à 80 °C, on lui ajoute 5 g de persulfate de potassium en solution dans 50 cm$^3$ d'eau. On introduit alors, simultanément, à débit constant :

190 g d'isobutène en 1 heure ;
19 g de persulfate de potassium dans 200 cm$^3$ d'eau, en 2 h 45 min ;
un mélange de 1 520 g d'acétate de vinyle et de 190 g de « Versatate VEOVA 10 »® en 3 heures.

Le « Versatate VEOVA 10 » est un mélange d'esters vinyliques d'acides monocarboxyliques ramifiés en $C_9$ à $C_{11}$.
Deux heures après la fin des introductions, le mélange réactionnel est refroidi.
Un latex de copolymère acétate de vinyle/isobutène/« Versatate »/acrylate d'éthyle 78/9, 75/9, 75/2,5 est obtenu, qui présente les caractéristiques suivantes :

| | |
|---|---|
| pH | 2,7 |
| viscosité | 700 mPa · s |
| concentration | 53 % |
| diamètre des particules | 0,1-0,4 μm |
| Tg du polymère | 17 °C |
| Tenue à l'eau | 20 min |

Par addition d'ammoniaque, le pH du latex est amené à 9 ; sa viscosité atteint 4 000 mPa · s après 10 heures et se stabilise.

**Revendications** (pour les Etats contractants : BE, CH, DE, FR, GB, IT, LI, NL, SE)

1. Latex de copolymères acétate de vinyle-oléfine constitués de particules de diamètre moyen compris entre 0,05 et 1 μm de copolymères ayant une température de transition vitreuse comprise entre − 30 et 50 °C, dont la concentration est comprise entre 10 et 70 % en poids, susceptibles d'être obtenus par copolymérisation en émulsion aqueuse de l'acétate de vinyle avec au moins une oléfine possédant de 2 à 4 atomes de carbone et éventuellement au moins un autre monomère copolymérisable en présence de 0,05 à 4,5 % en poids par rapport au poids des monomères d'un initiateur et éventuellement de 0,1 % à 3 % en poids par rapport au poids des monomères d'un agent émulsifiant, caractérisés en ce que l'agent émulsifiant éventuel est un agent émulsifiant anionique et/ou un agent émulsifiant cationique et en ce que l'opération de polymérisation est réalisée en outre en présence de 0,1 à 5 % en poids par rapport au poids des monomères à polymériser d'un colloïde protecteur en solution à 0,1-15 % en poids dans de l'eau, ledit colloïde protecteur étant formé de 15 à 70 % en poids d'un polymère de N-méthylolacrylamide ou de N-méthylolméthacrylamide soluble dans l'eau et de 30 à 85 % en poids d'un polymère d'éthylène glycol de masse moléculaire comprise entre 1 000 et 50 000 soluble dans l'eau.

2. Latex selon la revendication 1, caractérisés en ce que l'oléfine possède 2 à 4 atomes de carbone et le monomère copolymérisable avec l'acétate de vinyle est choisi parmi les esters vinyliques d'acides monocarboxyliques saturés ramifiés ou non ($C_1$-$C_{12}$) et/ou les esters d'acides insaturés mono- ou dicarboxyliques ($C_3$-$C_6$) et d'alcool ($C_1$-$C_{10}$) et/ou les halogénures de vinyle et de vinylidène et en ce que la quantité d'oléfine et de monomère copolymérisable est telle que le copolymère obtenu possède une température de transition vitreuse comprise entre − 30 et 50 °C.

3. Latex selon l'une des revendications 1 ou 2, caractérisés en ce que le polymère de N-méthylolacrylamide ou de N-méthylolméthacrylamide est un homopolymère, un copolymère de ces amides, un copolymère d'au moins un de ces amides avec au moins un amide des acides acrylique et méthacrylique et de leurs dérivés N-alkylés ($C_1$-$C_4$), substitués ou non par des groupes amine ou alcoxy ($C_1$-$C_4$), ou de leurs dérivés N-alkylés ($C_2$-$C_4$) substitués par un groupe hydroxy, un mélange de ces homo- et co-polymères, et en ce que le polymère de N-méthylolacrylamide ou de N-méthylolméthacrylamide est éventuellement réticulé par un agent de réticulation hydrosoluble.

4. Latex selon la revendication 3, caractérisé en ce que le polymère de N-méthylolacrylamide ou de N-méthylolméthacrylamide est obtenu par polymérisation en solution aqueuse du ou des amides à une concentration de 0,1 à 7 % en poids, en présence d'un initiateur radicalaire hydrosoluble et/ou de rayonnements ultra-violets à une température de 0 à 90 °C.

5. Latex selon l'une des revendications 1 à 4, caractérisés en ce que le polymère d'éthylène glycol est un homopolymère d'éthylène glycol, ou un copolymère d'éthylène glycol et de propylène glycol et/ou de butylène glycol dans lequel la proportion d'éthylène glycol est supérieure à 70 % en poids, ou un mélange d'homo-polymères et/ou de co-polymères d'éthylène glycol.

6. Latex selon l'une des revendications 1 à 5, caractérisés en ce qu'un polymère semence, semblable ou différent du polymère à obtenir, est présent dans le milieu de polymérisation. ·

**Revendications** (pour l'Etat contractant AT)

1. Procédé de préparation de latex d'acétate de vinyle constitués de particules de diamètre moyen compris entre 0,05 et 1 μm de copolymères ayant une température de transition vitreuse comprise entre − 30 et 50 °C, dont la concentration est comprise entre 10 et 70 % en poids, par copolymérisation en émulsion aqueuse de l'acétate de vinyle avec au moins une oléfine possédant 2 à 4 atomes de carbone et éventuellement au moins un autre monomère copolymérisable en présence de 0,05 à 4,5 % en poids par rapport au poids des monomères d'un initiateur et éventuellement de 0,1 à 3 % en poids par rapport au poids des monomères d'un agent émulsifiant, caractérisé en ce que l'agent émulsifiant éventuel est un agent émulsifiant anionique et/ou un agent émulsifiant cationique et en ce que l'opération de polymérisation est réalisée en outre en présence de 0,1 à 5 % en poids par rapport au poids des monomères à polymériser d'un colloïde protecteur en solution à 0,1-15 % en poids dans de l'eau, ledit colloïde protecteur étant formé de 15 à 70 % en poids d'un polymère de N-méthylolacrylamide ou de N-méthylolméthacrylamide soluble dans l'eau et de 30 à 85 % en poids d'un polymère d'éthylène glycol de masse moléculaire comprise entre 1 000 et 50 000 soluble dans l'eau.

2. Procédé selon la revendication 1, caractérisé en ce que l'oléfine possède 2 à 4 atomes de carbone et le monomère copolymérisable avec l'acétate de vinyle est choisi parmi les esters vinyliques d'acides monocarboxyliques saturés ramifiés ou non ($C_1$-$C_{12}$) et/ou les esters d'acides insaturés mono- ou di-carboxyliques ($C_3$-$C_6$) et d'alcool ($C_1$-$C_{10}$) et/ou les halogénures de vinyle et de vinylidène et en ce que la quantité d'oléfine et de monomère copolymérisable est telle que le copolymère obtenu possède une température de transition vitreuse comprise entre − 30 et 50 °C.

3. Procédé selon l'une des revendications 1 et 2, caractérisé en ce que le polymère de N-méthylolacrylamide ou de N-méthylolméthacrylamide est un homopolymère, un copolymère de ces amides, un copolymère d'au moins un de ces amides avec au moins un amide des acides acrylique et méthacrylique et de leurs dérivés N-alkylés ($C_1$-$C_4$), substitués ou non par des groupes amine ou alcoxy ($C_1$-$C_4$), ou de leurs dérivés N-alkylés ($C_2$-$C_4$) substitués par un groupe hydroxy, un mélange de ces homo- et co-polymères.

4. Procédé selon la revendication 3, caractérisé en ce que le polymère de N-méthylolacrylamide ou de N-méthylolméthacrylamide est obtenu par polymérisation en solution aqueuse du ou des amides à une concentration de 0,1 à 7 % en poids, en présence d'un initiateur radicalaire hydrosoluble et/ou de rayonnements ultra-violets à une température de 0 à 90 °C.

5. Procédé selon l'une des revendications 1 à 4, caractérisé en ce que le polymère de N-méthylolacrylamide ou N-méthylolméthacrylamide est réticulé par un agent de réticulation hydrosoluble.

6. Procédé selon l'une des revendications 1 à 4, caractérisé en ce que le polymère d'éthylène glycol est un homopolymère d'éthylène glycol, ou un copolymère d'éthylène glycol et de propylène glycol et/ou de butylène glycol dans lequel la proportion d'éthylène glycol est supérieure à 70 % en poids, ou un mélange d'homo-polymères et/ou de co-polymères d'éthylène glycol.

7. Procédé selon l'une des revendications 1 à 6, caractérisé en ce qu'un polymère semence, semblable ou différent du polymère à obtenir, est présent dans le milieu de polymérisation.

**Claims** (for the Contracting States : BE, CH, DE, FR, GB, IT, LI, NL, SE)

1. Latexes of vinyl acetate-olefin copolymers, comprising particles of a mean diameter of between 0.05 and 1 μm of copolymers having a vitreous transition temperature of between − 30 and 50 °C, the concentration of which is between 10 and 70 % by weight, which are capable of being produced by copolymerisation in aqueous emulsion of vinyl acetate with at least one olefin having from 2 to 4 carbon atoms optionally at least one other copolymerisable monomer in the presence of from 0.05 to 4.5 % by weight with respect to the weight of the monomers of an initiator and optionally from 0.1 % to 3 % by weight with respect to the weight of the monomers of an emulsifying agent characterised in that the optional emulsifying agent is an anionic emulsifying agent and/or a cationic emulsifying agent and that the polymerisation operation is also carried out in the presence of from 0.1 to 5 % by weight with respect to the weight of the monomers to be polymerised of a protective colloid in 0.1 to 15 % by weight solution in water, said colloid being formed by from 15 to 70 % by weight of a polymer of N-methylolacrylamide or N-methylolmethacrylamide which is soluble in water and from 30 to 85 % by weight of a polymer of ethylene glycol having a molecular weight of from 1,000 to 5,000, which is water-soluble.

2. Latexes according to claim 1, characterised in that the olefin has from 2 to 4 carbon atoms and the monomer which is copolymerisable with vinyl acetate is selected from vinyl esters of branched or unbranched saturated monocarboxylic acids ($C_1$-$C_{12}$) and/or esters of unsaturated mono- or dicarboxylic acids ($C_3$-$C_6$) and alcohol ($C_1$-$C_{10}$) and/or vinyl and vinylidene halides, and that the amount of olefin and copolymerisable monomer is such that the copolymer produced has a vitreous transition temperature of between − 30 and 50 ºC.

3. Latexes according to one of claims 1 or 2, characterised in that the N-methylolacrylamide or N-methylolmethacrylamide polymer is a homopolymer, a copolymer of said amides, a copolymer of at least one of said amides with at least one amide of acrylic and methacrylic acids and N-alkylated ($C_1$-$C_4$) derivatives thereof, which may or may not be substituted by amine or alkoxy ($C_1$-$C_4$) groups, or their N-alkylated ($C_2$-$C_4$) derivatives which are substituted by a hydroxy group, or a mixture of said homo- and copolymers, and that the N-methylolacrylamide or N-methylolmethacrylamide polymer is optionally crosslinked a water-soluble cross-linking agent.

4. Latexes according to claim 3, characterised in that the N-methylolacrylamide or N-methylolmethacrylamide polymer is produced by polymerisation in aqueous solution of the amide or amides in a concentration of from 0.1 to 7 % by weight in the presence of a water-soluble radical-forming initiator and/or ultra-violet radiation at a temperature of from 0 to 90 ºC.

5. Latexes according to one of claims 1 to 4, characterised in that the ethylene glycol polymer is an ethylene glycol homopolymer or a copolymer of ethylene glycol and propylene glycol and/or butylene glycol in which the proportion of ethylene glycol is higher than 70 % by weight, or a mixture of homopolymers and/or copolymers of ethylene glycol.

6. Latexes according to one of claims 1 to 5, characterised in that a seed polymer which is similar to or different from the polymer to be produced is present in the polymerisation medium.

**Claims** (for the Contracting State AT)

1. A process for the preparation of latexes of vinyl acetate, which comprise particles of a mean diameter of between 0.05 and 1 μm of copolymers having a vitreous transition temperature of between − 30 and 50 ºC, the concentration of which is between 10 and 70 % by weight, by copolymerisation in aqueous emulsion of vinyl acetate with at least one olefin having from 2 to 4 carbon atoms and optionally at least one other copolymerisable monomer in the presence of from 0.05 to 4.5 % by weight with respect to the weight of the monomers of an initiator and optionally from 0.1 % to 3 % by weight with respect to the weight of the monomers of an emulsifying agent characterised in that the optional emulsifying agent is an anionic emulsifying agent and/or a cationic emulsifying agent and that the polymerisation operation is also carried out in the presence of from 0.1 to 5 % by weight with respect to the weight of the monomers to be polymerised of a protective colloid in 0.1 to 15 % by weight solution in water, said colloid being formed by from 15 to 70 % by weight of a polymer of N-methylolacrylamide or N-methylolmethacrylamide which is soluble in water and from 30 to 85 % by weight of polymer of ethylene glycol having a molecular weight of from 1,000 to 50,000, which is water-soluble.

2. A process according to claim 1, characterised in that the olefin fas from 2 to 4 carbon atoms and the monomer which is copolymerisable with vinyl acetate is selected from vinyl esters of branched or unbranched saturated monocarboxylic ($C_1$-$C_{12}$) and/or esters of unsaturated mono- or dicarboxylic acids ($C_3$-$C_6$) and alcohol ($C_1$-$C_{10}$) and/or vinyl and vinylidene halides, and that the amount of olefin and copolymerisable monomer is such that the copolymer produced has a vitreous transition temperature of between − 30 and 50 ºC.

3. A process according to one of claims 1 and 2, characterised in that the N-methylolacrylamide or N-methylolmethacrylamide polymer is a homopolymer, a copolymer of said amides, a copolymer of at least one of said amides with at least one amide of acrylic and methacrylic acids and N-alkylated ($C_1$-$C_4$) derivatives thereof, which may or may not be substituted by amine or alkoxy ($C_1$-$C_4$) groups, or their N-alkylated ($C_2$-$C_4$) derivatives which are substituted by a hydroxy group, or a mixture of said homo- and copolymers.

4. A process according to claim 3, characterised in that the N-methylolacrylamide or N-methylolmethacrylamide polymer is produced by polymerisation in aqueous solution of the amide or amides in a concentration of from 0.1 to 7 % by weight in the presence of a water-soluble radical-forming initiator and/or ultra-violet radiation at a temperature of from 0 to 90 ºC.

5. A process according to one of claims 1 to 4, characterised in that the N-methylolacrylamide or N-methylolmethacrylamide polymer is cross-linked by a water-soluble cross-linking agent.

6. A process according to one of claims 1 to 4, characterised in that the ethylene glycol polymer is an ethylene glycol homopolymer or a copolymer of ethylene glycol and propylene glycol and/or butylene glycol in which the proportion of ethylene glycol is higher than 70 % by weight, or a mixture of homopolymers and/or copolymers or ethylene glycol.

7. A process according to one of claims 1 to 6, characterised in that a seed polymer which is similar to or different from the polymer to be produced is present in the polymerisation medium.

**Patentansprüche** (für die Vertragsstaaten : BE, CH, DE, FR, GB, IT, LI, NL, SE)

1. Latex aus Vinylacetat-Olefin-Copolymeren, die Copolymerteilchen eines mittleren Durchmessers zwischen 0,05 und 1 µm enthalten, deren Glasübergangstemperatur zwischen − 30 und 50 °C liegt und deren Konzentration zwischen 10 und 70 Gew.-% beträgt, und die durch Copolymerisation in wässriger Emulsion von Vinylacetat mit wenigstens einem Olefin mit 2 bis 4 Kohlenstoffatomen und gegebenenfalls wenigstens einem anderen copolymerisierbaren Monomeren in Gegenwart von 0,05 bis 4,5 Gew.-% eines Initiators, bezogen auf das Gewicht der Monomeren, und gegebenenfalls von 0,1 bis 3 Gew.-% eines Emulgiermittels, bezogen auf das Gewicht der Monomeren, erhältlich sind, dadurch gekennzeichnet, daß das gegebenenfalls zugesetzte Emulgiermittel ein anionisches und/oder kationisches Emulgiermittel ist und dadurch, daß die Polymerisation außerdem in Gegenwart von 0,1 bis 5 Gew.-%, bezogen auf das Gewicht der zu polymerisierenden Monomere, eines zu 0,1 bis 15 Gew.-% in Wasser gelösten Schutzkolloids durchgeführt wird, wobei das Schutzkolloid aus 15 bis 70 Gew.-% eines wasserlöslichen Polymeren von N-Methylolacrylamid oder von N-Methylolmethacrylamid und aus 30 bis 85 Gew.-% eines wasserlöslichen Polymeren von Ethylenglykol einer Molmasse zwischen 1 000 und 50 000 gebildet wird.

2. Latex nach Anspruch 1, dadurch gekennzeichnet, daß das Olefin 2 bis 4 Kohlenstoffatome besitzt und das mit dem Vinylacetat copolymerisierbare Monomer ausgewählt wird unter den Vinylestern von gesättigten, verzweigten oder unverzweigten $C_1$-$C_{12}$-Monocarbonsäuren und/oder den Estern aus ungesättigten Mono- oder Dicarbonsäuren ($C_3$-$C_6$) und $C_1$-$C_{10}$-Alkohol und/oder den Vinyl- und Vinylidenhalogeniden, und dadurch gekennzeichnet, daß die Menge des Olefins und des copolymerisierbaren Monomers so gewählt wird, daß das gebildete Copolymere eine Glasübergangstemperatur zwischen − 30 und 50 °C besitzt.

3. Latex nach einem der Ansprüche 1 oder 2, dadurch gekennzeichnet, daß das Polymere von N-Methylolacrylamid oder N-Methylolmethacrylamid ein Homopolymeres, ein Copolymeres dieser Amide, ein Copolymeres aus wenigstens einem dieser Amide mit wenigstens einem Amid der Acryl- und Methacrylsäure, dessen N-alkylierten ($C_1$-$C_4$)-Derivaten, die durch Amin- oder Alkoxygruppen ($C_1$-$C_4$) substituiert sein können, oder dessen mit einer Hydroxygruppe substituierten N-Alkylderivaten ($C_2$-$C_4$), oder ein Gemisch dieser Homo- und Copolymeren ist, und dadurch, daß das Polymere von N-Methylolacrylamid oder N-Methylolmethacrylamid gegebenenfalls mit einem wasserlöslichen Vernetzungsmittel vernetzt wird.

4. Latex nach Anspruch 3, dadurch gekennzeichnet, daß das Polymere von N-Methylolacrylamid oder N-Methylolmethacrylamid durch Polymerisation des Amids oder der Amide mit einer Konzentration von 0,1 bis 7 Gew.-% in wässriger Lösung in Gegenwart eines wasserlöslichen Radikalstarters und/oder von ultravioletter Bestrahlung bei einer Temperatur zwischen 0 und 90 °C erhalten wird.

5. Latex nach einem der Ansprüche 1 bis 4, dadurch gekennzeichnet, daß das Polymere von Ethylenglykol ein Homopolymeres von Ethylenglykol, oder ein Copolymeres von Ethylenglykol und Propylenglykol und/oder von Butylenglykol, in dem der Anteil an Ethylenglykol über 70 Gew.-% liegt, oder ein Gemisch von Homopolymeren und/oder Copolymeren von Ethylenglykol ist.

6. Latex nach einem der Ansprüche 1 bis 5, dadurch gekennzeichnet, daß in dem Polymerisationsmilieu ein Saatpolymeres enthalten ist, das dem herzustellenden Polymer gleich oder von ihm verschieden sein kann.

**Patentansprüche** (für den Vertragsstaat AT)

1. Verfahren zur Herstellung von Latex aus Vinylacetat-Olefin-Copolymeren, die Copolymerteilchen eines mittleren Durchmessers zwischen 0,05 und 1 µm enthalten, deren Glasübergangstemperatur zwischen − 30 und 50 °C liegt und deren Konzentration zwischen 10 und 70 Gew.-% beträgt, durch Copolymerisation in wässriger Emulsion von Vinylacetat mit wenigstens einem Olefin mit 2 bis 4 Kohlenstoffatomen und gegebenenfalls wenigstens einem anderen copolymerisierbaren Monomeren in Gegenwart von 0,05 bis 4,5 Gew.-% eines Initiators, bezogen auf das Gewicht der Monomeren, und gegebenenfalls von 0,1 bis 3 Gew.-% eines Emulgiermittels, bezogen auf das Gewicht der Monomeren, dadurch gekennzeichnet, daß das gegebenenfalls zugesetzte Emulgiermittel ein anionisches und/oder kationisches Emulgiermittel ist und daß die Polymerisation außerdem in Gegenwart von 0,1 bis 5 Gew.-%, bezogen auf das Gewicht der zu polymerisierenden Monomere, eines zu 0,1 bis 15 Gew.-% in Wasser

11

gelösten Schutzkolloids durchgeführt wird, wobei das Schutzkolloid aus 15 bis 70 Gew.-% eines wasserlöslichen Polymeren von N-Methylolacrylamid oder von N-Methylolmethacrylamid und aus 30 bis 85 Gew.-% eines wasserlöslichen Polymeren von Ethylenglykol einer Molmasse zwischen 1 000 und 500 000 gebildet wird.

2. Verfahren nach Anspruch 1, dadurch gekennzeichnet, daß das Olefin 2 bis 4 Kohlenstoffatome besitzt und das mit dem Vinylacetat copolymerisierbare Monomer ausgewählt wird unter den Vinylestern von gesättigten, verzweigten oder unverzweigten $C_1$-$C_{12}$-Monocarbonsäuren und/oder den Estern aus ungesättigten Mono- oder Dicarbonsäuren ($C_3$-$C_6$) und $C_1$-$C_{10}$-Alkohol und/oder den Vinyl- und Vinylidenhalogeniden, und dadurch, daß die Menge des Olefins und des copolymerisierbaren Monomeren so gewählt wird, daß das gebildete Copolymere eine Glasübergangstemperatur zwischen − 30 und 50 °C besitzt.

3. Verfahren nach einem der Ansprüche 1 oder 2, dadurch gekennzeichnet, daß das Polymere von N-Methylolacrylamid oder von N-Methylolmethacrylamid ein Homopolymeres, ein Copolymeres dieser Amide, ein Copolymeres aus wenigstens einem dieser Amide mit wenigstens einem Amid der Acryl- und Methacrylsäure, dessen N-alkylierten ($C_1$-$C_4$)-Derivaten, die durch Amin- oder Alkoxygruppen ($C_1$-$C_4$) substituiert sein können, oder dessen mit einer Hydroxygruppe substituierten N-Alkylderivaten ($C_2$-$C_4$), oder ein Gemisch dieser Homo- und Copolymeren ist.

4. Verfahren nach Anspruch 3, dadurch gekennzeichnet, daß das Polymere von N-Methylolacrylamid oder von N-Methylolmethacrylamid durch Polymerisation des Amids oder der Amide mit einer Konzentration von 0,1 bis 7 Gew.-% in wässriger Lösung in Gegenwart eines wasserlöslichen Radikalstarters und/oder von ultravioletter Bestrahlung bei einer Temperatur zwischen 0 und 90 °C erhalten wird.

5. Verfahren nach einem der Ansprüche 1 bis 4, dadurch gekennzeichnet, daß das Polymere von N-Methylolacrylamid oder N-Methylolmethacrylamid mit einem wasserlöslichen Vernetzungsmittel vernetzt wird.

6. Verfahren nach einem der Ansprüche 1 bis 4, dadurch gekennzeichnet, daß das Polymere von Ethylenglykol ein Homopolymeres von Ethylenglykol, oder ein Copolymeres von Ethylenglykol und Propylenglykol und/oder Butylenglykol, in dem der Anteil an Ethylenglykol über 70 Gew.-% liegt, oder ein Gemisch von Homopolymeren und/oder Copolymeren von Ethylenglykol ist.

7. Verfahren nach einem der Ansprüche 1 bis 6, dadurch gekennzeichnet, daß in dem Polymerisationsmilieu ein Saatpolymeres enthalten ist, das dem herzustellenden Polymer gleich oder von ihm verschieden sein kann.